# EUROPEAN PATENT APPLICATION

(11) **EP 2 608 124 A1**
(43) Date of publication of application: **26.06.2013**
(21) Application number: 11306707.8
(22) Date of filing: 20.12.2011
(51) Int. Cl.: G06Q 10/00

(54) **Systems and methods for monitoring compliance status based on time-ordered reference periods**

(71) Applicant: Hewlett-Packard Development Company, L.P., Houston, TX 77070 (US)
(72) Inventor: Richard, Jean-Luc, 06901 Sophia-Antipolis (FR); Pelisser, Dominique, 06901 Sophia-Antipolies (FR)
(74) Representative: Delumeau, François Guy

(57) **Abstract**

A method (400) for delivering the services of automatic service level agreements includes receiving (402) a customer's selection through a service manager portal of a number of services offered by a number of third-party service providers; and invoking (404) underlying contracts with the number of third-party service providers that correspond to the selected services. The underlying contracts are modified when created based on an evaluation of each of the third-party service providers.

## Description

### BACKGROUND

A service level agreement (SLA) is used to control the relationship between a customer and a service provider. The SLA governs the provision of services by the service provider to the customer, in particular, the quality and quantity of the service to be provided. An example of one of these services is internet connectivity provided by an internet service provider. Another example is a communications service provider supplying a customer with telephonic communications. The growing number of service providers that provide a particular service, and the growing number of customers that a particular service provider can accommodate, have created a demand for a simple and efficient way to make SLAs.

### BRIEF DESCRIPTION OF THE DRAWINGS

The accompanying drawings illustrate various examples of the principles described herein and are a part of the specification. The illustrated examples do not limit the scope of the claims.

Fig. 1 is a diagram of a system for delivering the services of an automatic service level agreement, according to one example of principles described herein.

Fig. 2 is a diagram of an agreement system for delivering the services of an automatic service level agreement, according to one example of principles described herein.

Fig. 3a and 3b are diagrams of an agreement system for delivering the services of an automatic service level agreement, according to other examples of principles described herein.

Fig. 4 is a flowchart showing a method for the services of an automatic service level agreement, according to one example of principles described herein.

Fig. 5 is a flowchart showing a method for delivering the services of an automatic service level agreement, according to one example of principles described herein.

Fig. 6 is a flowchart showing a method for delivering the services of an automatic service level agreement, according to one example of principles described herein.

Throughout the drawings, identical reference numbers designate similar, but not necessarily identical, elements.

### DETAILED DESCRIPTION

As described herein, a service manager portal aggregates a listing of services from any number of third-party service providers. The service manager portal then presents a customer with a catalog of the available service options from the population of third-party service providers that are available to service the needs of that customer. The entity that operates the service manager portal may also provide a number of services itself, alongside the services provided by the third-party service providers.

From this catalog, a customer can select a number of services desired, even if those services are offered by different third-party service providers. A customer may also select a number of service objectives that reflect the customer's desired level of service. The service manager portal then creates a single SLA to provide the selected services to that customer. This SLA is a compilation of different service relationships that the service manager portal will invoke with the third-party service providers to provide the package of services needed by the customer at the level specified by the customer, In this example, one SLA is created per customer, instead of the customer needing to make a separate SLA for each of the selected services and with each corresponding third-party service provider. The SLA is thus created between the operator of the service manager portal, as a general contractor, and the customer.

After the SLA is in place, the service manager portal is responsible for the contract with the customer. Consequently, the service manager portal then invokes underlying contracts with the third-party service providers to provide the customer with the agreed services. The service manager portal also will monitor the performance of the third-party service providers to see that the terms of the SLA with the customer are satisfied. The service manager portal will keep a history of each third-party service provider and their record of providing the services requested by the portal's customers. Information about the performance of each third-party service provider may also be obtained from any other source, such as other contractors who use the services of the third-party service provider. If a third-party service provider has a history of failing to adequately perform in providing services to customers, the service manager portal may change the way in which it deals with that third-party service provider, as will be described in more detail below.

In light of these and other issues, the present specification discloses a method and a system for modifying the underlying contracts with the third-party service providers to ensure delivery of the services to the customer. This is done through the specification, storage and execution of rules for the automatic creation of underlying contracts between the service manager portal and third-party service providers in order to check the responsibility of the different service providers involved in the overall service delivery to the final customer. The present specification does this by evaluating the third-party service providers, and as those service providers are selected to provide a service to a customer, modifying the agreement between the service manager portal and that third-party service provider in order to ensure that the third-party service provider performs appropriately with adequate remedies for non-performance.

According to one example of the disclosure, the method begins as a customer selects a number of services and a number of third-party service providers to provide those services. According to another example the customer selects a number of services and the service manager portal then selects a number of third-party service providers to provide the selected services. With the third-party service providers selected, the service manager portal then prepares to invoke an underlying contract between the service manager portal and the selected third-party service providers. Before invoking the underlying contract with each third-party service provider, the service manager portal evaluates each of the third-party service providers selected based on, for example, that third-party service provider's performance record under previous contracts. The service manager portal may then modify the underlying contract to be invoked with that third-party service provider based on this evaluation. This evaluation may consider any number of factors including, but not limited to, historical performance, professional reputation, financial stability, customer satisfaction, and risk of noncompliance. For example, if a service provider has a history of underperformance, additional requirements may be incorporated into the underlying contract to ensure satisfactory service delivery or provide adequate remedies for non-performance.

As used in the present specification and in the appended claims, the term "Service Level Agreement" or "SLA" refers to an agreement between the service manager portal and the customer under which the service manager portal will see that the identified services are properly provided to the customer according to specified objectives for a stated period of time. To do this, the service manager portal contracts with third-party service providers to provide at least some of the services needed by the customer.

As used in the present specification and in the appended claims, the term "service level agreement item" or "SLA item" refers to a section of an SLA that pertains to a particular service provided. An example of an SLA item is internet connectivity, A service may be referenced by a number of SLA items.

As used in the present specification and in the appended claims, the term "service level agreement clause" or "SLA clause" refers to a provision in an SLA item that defines a performance standard of the service provision. For example, an SLA clause in an internet connectivity SLA item may state that the internet connectivity will be provided at a rate of greater than 1.8 Mbps.

As used in the present specification and in the appended claims, the term "service" refers to one or more services being offered or provided under contract. For example, the service may be associated with a number of conditions such as the term of the contract, a service level performance standard, and reasons why the service may be cancelled. Each SLA item in an SLA corresponds to a service selected by the customer.

In the following description, for purposes of explanation, numerous specific details are set forth in order to provide a thorough understanding of the present systems and methods. It will be apparent, however, to one skilled in the art that the present apparatus, systems and methods may be practiced without these specific details. Reference in the specification to "an example" or similar language means that a particular feature, structure, or characteristic described in connection with the example is included in at least that one example, but not necessarily in other examples. The various instances of the phrase "in one example" or similar phrases in various places in the specification are not necessarily all referring to the same example.

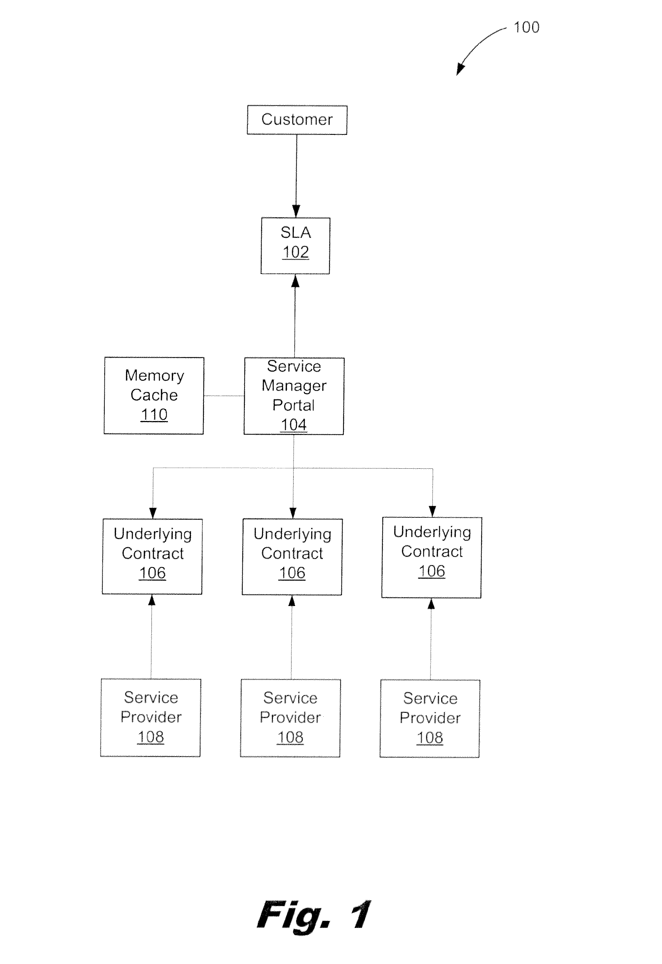

Referring now to the figures, Fig. 1 is a diagram of a system (100) for delivering the services of an automatic service level agreement. The system (100) may include an SLA (102). As described above an SLA (102) is an agreement between a customer and the service manager portal (104) under which the service manager portal (104) ensures that the agreed level of service is provided to the customer. The SLA (102) may reference a single service or a set of services selected by the customer.

The system (100) may also include a service manager portal (104) which acts as the contractor of the SLA (102). The service manager portal (104) ensures that the services selected by the customer are delivered as specified by the customer. According to one example, a customer selects one or more services from a catalog of services provided by third-party service providers (108) and, in some cases, by the service manager portal (104), itself. Then, the service manager portal (104) invokes an underlying contract (106) with each third-party service provider (108) to create a bundle of services as requested by the customer. As such, the service manager portal (104) may be thought of as being analogous to a general contractor in that it coordinates with third-party service providers (108) to ensure delivery of the services to the customer. In this context, the third-party service providers (108) are analogous to subcontractors, each of which are enabled to provide a portion of the services delivered to the customer. Each underlying contract (106) is an agreement between the service manager portal (104) and the third-party service provider (108) to ensure acceptable delivery of the service to the final customer.

During this process, the service manager portal (104) evaluates the third-party service providers (108) and modifies the underlying contracts (106) based on the evaluation. Examples of evaluation criteria include, but are not limited to historical performance, professional reputation, financial history, credit score, number of customer complaints, and compliance with past underlying contracts.

According to another example of the system (100), after the customer has selected a service, the service manager portal (104) selects a third-party service provider (108) to provide that service to the customer. Similar to the above description, the service manager portal (104) may evaluate the third-party service providers (108) based on any number of criteria and select a third-party service provider to provide the service. In the event a third-party service provider has an unfavorable evaluation, the service manager portal (104) imposes additional performance standards in the underlying contract (106) to help ensure the third-party service provider (108) performs as agreed or to provide adequate remedies in the event of a failure to fully perform.

According to one example, the entity that operates the service manager portal (104) may provide at least a portion of the services selected by the customer as will be described in more detail below. One skilled in the art will appreciate that an SLA (102) may contain services provided by both a third-party service provider (108) and the service manager portal (104) entity.

The service manager portal (104) will also maintain a history or record of each third-party service provider (108) on which future evaluations may be based. This historical record may include the raw data detailing the third-party's performance in previous contracts relative to the standards specifies in those contracts and any other evaluation criteria that might be used to decide whether to modify an underlying contract (106) to be invoked with that service provider. For example, the service manager portal (104) may maintain a record of customer complaints against a particular third-party service provider.

By evaluating the third-party service providers (108), modifying the underlying contracts (106) and maintaining a historic record of the third-party service providers in this fashion, the service manager portal (104) regulates the delivery of the service by the third-party service providers to improve SLA compliance. This reduces the number of potential breaches of an SLA (102) and increases overall efficiency of the SLA management.

According to an example of the system (100), the service manager portal (104) automatically evaluates the third-party service providers (108), modifies the underlying contracts (106) and records performance by the third-party service providers. The automation alleviates the need for manual creation and monitoring of the underlying contracts (106). Thus, creation and monitoring the underlying contracts (106) can be done in near real-time. This automation reduces the time, cost and manpower for efficient SLA management.

As noted above, the system (100) includes a number of underlying contracts (106) between the service manager portal (104) and the number of third-party service providers (108) that provide the selected services to the customer. When a customer selects a service, the service manager portal (104) invokes these underlying contracts (106) with the third-party service providers. As described above, the service manager portal (104) may selectively modify these underlying contracts (106) based on an evaluation of the third-party service providers (108). These modifications to the underlying contracts (106) help ensure that the service is delivered to the customer according to the performance standards presented in the SLA (102) or provide enhanced remedies for non-performance. The underlying contracts (106) may be continually monitored for the period of time stated in the SLA (102) to ensure third-party service provider (108) compliance. Alternatively, if a third-party service provider has an excellent evaluation, the underlying contract may be simplified or modified in favor of the third-party service provider appropriate to the level of trust that service-provider has achieved. In some cases, this may simplify the subsequent management of the underlying contract with that favored third-party service provider.

Referring again to Fig. 1, the system may also include a number of third-party service providers (108) that provide the services to the customer. For example, if the service selected is to provide internet connectivity, the third-party service provider (108) may provide the physical location of the data files that allow the customer to access the internet. According to another example, if the service is for virtual private network access, the third-party service provider (108) could grant the customer's Internet Protocol address access to the network. While Fig. 1 depicts three underlying contracts (106) and three third-party service providers (108), any number of underlying contracts may be invoked on any number of third-party service providers.

The system (100) may also include a memory cache (110) communicatively coupled to the service manager portal (104). The memory cache (110) may store data pertaining to the third-party service provider's (108) evaluation criteria. For example, once a customer selects a particular service, the service manager portal (104) may use the data pertaining to the third-party service provider (108) to determine any modifications to apply to the underlying contracts (106). This raw data may be located in the memory cache (110).

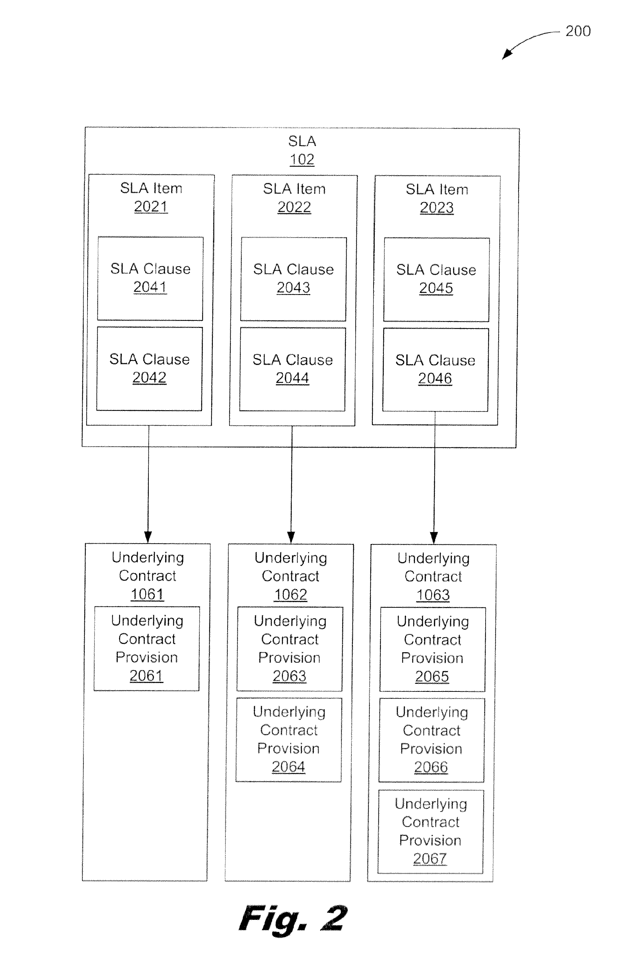

Fig. 2 is a diagram of an agreement system for delivering services of an automatic service level agreement (200). The system includes an SLA (102), which is made up of a number of SLA items (2021, 2022, 2023). These SLA items (2021, 2022, 2023) correspond to the services selected by a customer. For example, if internet connectivity is a service selected by a customer, the corresponding SLA (102) will include an SLA item (2021, 2022, 2023) that describes the internet connectivity service. These SLA items (2021, 2022, 2023) are made up of SLA clauses (2041, 2042, 2043, 2044, 2045, 2046) which are performance standards of the service that are selected by a customer. For example, for the service of internet connectivity, an SLA clause (2041, 2042, 2043, 2044, 2045, 2046) may stipulate that internet will be provided at a rate of greater than 1.8 Mbps.

The system (200) also includes a number of underlying contracts (1061, 1062, 1063) which also correspond to the services selected by the customer. As described above, these underlying contracts (1061, 1062 1063) are agreements between the service manager portal (Fig. 1, 104) and the number of third-party service providers (Fig. 1, 108) by which the service manager portal provides the customer with the services selected by the customer at the level dictated by the selected performance standards. The underlying contracts (1061, 1062, 1063) include a number of underlying contract provisions (2061, 2063, 2064, 2065, 2066, 2067), that correspond to the performance standards selected by the customer.

Once a customer selects a number of services and a number of performance standards that meets its needs, the service manager portal (Fig. 1, 104) activates the SLA items (2021, 2022, 2023) and SLA clauses (2061, 2063, 2064, 2065, 2066, 2067) that correspond to those services and performance standards. From this the SLA is put in place between the customer and the service manager portal, The service manager portal (Fig. 1, 104) then invokes a number of underlying contracts (1061, 1062, 1063) that correspond to the SLA items (2021, 2022, 2023). These underlying contracts (2021, 2022 2023) include a number of underlying contract provisions (2061, 2063, 2064, 2065, 2066, 2067). These provisions are based on the performance standards selected by the customer and the evaluation of the third-party service providers (Fig. 1, 108) to provide that the service will be delivered as selected by the customer.

In the system (200), the service manager portal (Fig. 1, 104) may evaluate the third-party service providers (Fig. 1, 108) and modify the provisions of the underlying contracts (1061, 1062, 1063) such that the service provided remains the same, but the performance standards differ from the SLA clauses (2041, 2042, 2043, 2044, 2045, 2046) presented to the customer. For example, if a service provider has historically failed to satisfy a particular level of service requested, the new underlying contract with that service provider may require an even higher level of service that is called for in the corresponding SLA with the customer. In this way, even if the third-party service provider underperforms the underlying contract with the service manager portal, the level of service may still be high enough to satisfy the SLA with the customer. As explained above, such modifications may be determined based on a number of evaluation criteria. Examples of such evaluation criteria include, but are not limited to, professional reputation, financial stability, credit history, past complaints from customers, and past compliance with underlying contracts. According to one example, the service manager portal (fig. 1, 104) automatically makes the modifications to the underlying contracts (1061, 1062, 1063).

In one example, the service manager portal (Fig. 1, 104) may maintain the underlying contract provisions (2063, 2064) that correspond to particular SLA clauses (2043, 2044), and alter the values of the corresponding underlying contract provisions. For example, based on an evaluation of the third-party service provider, SLA clauses ensuring that internet will be connected at greater than 1.8 Mbps (2043) for 98% of the time (2044) may be incorporated into an underlying contract (1062) but altered to provide internet connectivity at 1.9 Mbps (2063), for 99% of the time (2064). In this fashion, the service level manager (Fig. 1, 104) may ensure that the service objectives presented to the customer are not breached.

A service manager portal (Fig. 1, 104) may also add underlying contract provisions to an underlying contract. For example, a customer selects a database access SLA item (2023) and SLA clauses (2045, 2046) ensuring that database access will be greater than 1.8 Mbps for 98% of the time. Next, the service manager portal (Fig. 1, 104) evaluates the third-party service provider (Fig. 1, 108) that corresponds to this SLA item (2023) and determines that the third-party service provider has a history of failing to provide database access at greater than 1.8 Mbps for 98% of the time. According to this example, in addition to the underlying contract provisions of providing database access at greater than 1.8 Mbps (2065) for 98% of the time (2066), the service manager portal (Fig. 1, 104) may automatically incorporate an additional underlying contract provision (2067) that imposes a penalty upon the service provider whenever internet is not provided at greater than 1.8 Mbps for 98% of the time. According to this example information relating to the internet connectivity could be stored on the memory cache (Fig. 1, 110).

In other examples, the service manager portal (Fig. 1, 104) may remove underlying contract provisions from the underlying contract (1061) for third-party service providers who have a demonstrated record of performing or exceeding contract expectations. Suppose an SLA item of virtual private network access (2021) contains SLA clauses that ensure twenty four hour access (2041), and downtime of less than 1.5% (2042). In the event a third-party service provider (Fig. 1, 108) consistently has downtime of less than 1.3%, the service manager portal (Fig. 1, 104) may remove this standard from the underlying contract (1061). Thus the underlying contract item (1061) is left with just the underlying contract provision that pertains to twenty four hour access (2061). This makes the underlying contract easier to administer.

In another example, the service manager portal (Fig. 1, 104) may include the underlying contract provisions without making any modification. In this example the SLA clauses would match the underlying contract provisions. It will be appreciated by one skilled in the art that the service manager portal (Fig. 1, 104) may make any combination of these modifications for a given SLA (Fig. 1, 102).

By modifying the underlying contracts (1061, 1062, 1063) in this fashion, a service manager portal (Fig. 1, 104) creates an efficient service relationship that ensures service provision and shifts the risk of nonperformance from the customer to the third-party service provider. According to one example the service manager portal (Fig. 1, 104) makes these modifications to the underlying contracts (1061, 1062, 1063) automatically. By doing this modification automatically, user input is reduced which decreases the cost and increases the efficiency of SLA management.

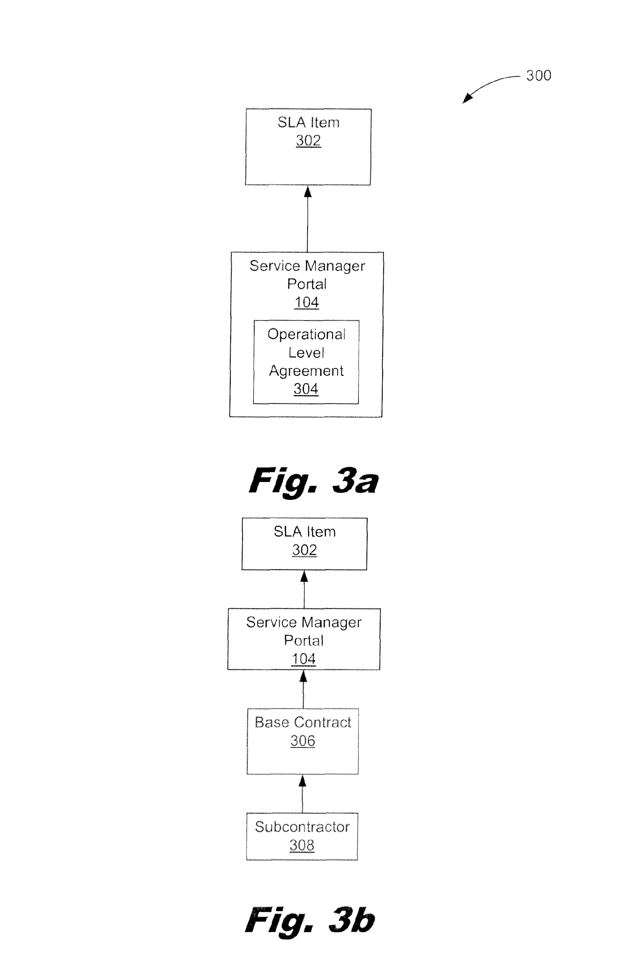

Fig. 3a and 3b are diagrams of an agreement system for delivering the services of an automatic service level agreement (SLA) (300). In this system (300), the service manager portal (104) may deliver at lease a portion of the services selected by the customer. According to one example (Fig. 3a) the service provided to the customer originates at the service manager portal (104) and is not the work of a third-party service provider. This service is represented in the SLA (Fig. 1, 102) by an SLA item (302).

To govern the delivery of such a service, the service manager portal (104) may invoke an operational level agreement (304) or OLA. An OLA (304) is an agreement between internal units within the service manager portal (104) system to ensure delivery of the service according to the performance standards selected by the customer. For example, corresponding to a database access SLA item, an OLA may be invoked between a power management unit and a database maintenance unit to ensure that sufficient power is provided to the database such that it may be readily accessed by the customer. While Fig. 3a depicts one OLA (304) within the service manager portal (104), any number of OLAs may be invoked to ensure adequate service delivery.

Similar to Fig. 3a, Fig. 3b depicts an example of the system in which the service manager portal (104) may deliver at least a portion of the services selected by the customer. In this example, the service manager portal (104) acquires from a subcontractor (308) the services that are ultimately delivered to the customer. In this example, the service manager portal (104) may impose a base contract (306) on the subcontractor (308) to ensure that the service is delivered as selected. As with underlying contracts (Fig. 1, 106), a service manager portal (104) may modify this base contract (306) based on a number of performance factors, In the event multiple subcontractors (308) are available to supply a particular service to the service manager portal (104), the service manager portal may evaluate and select a subcontractor that meets its needs.

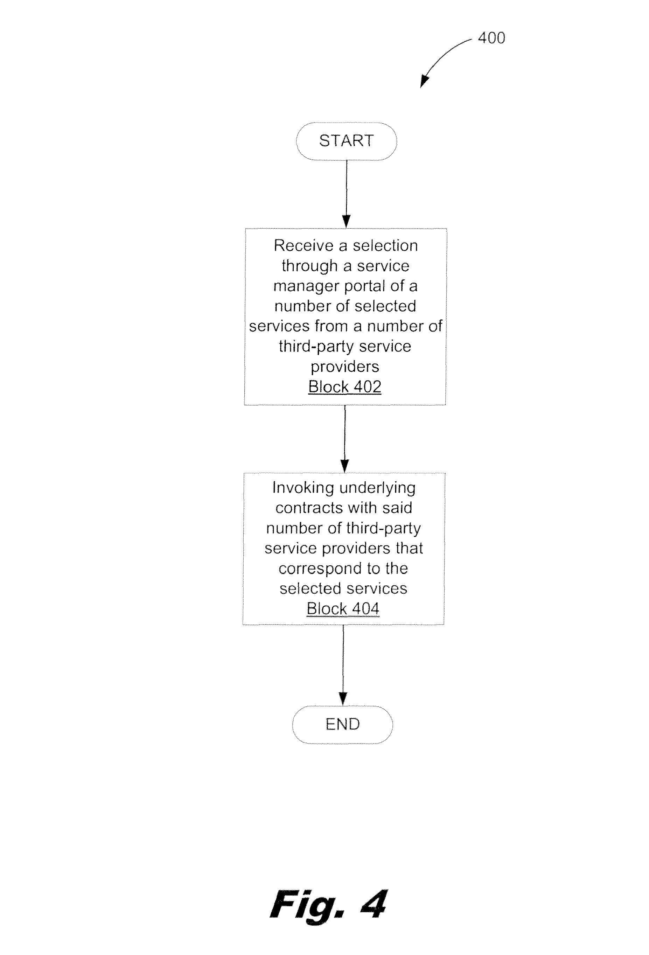

Fig. 4 is a flowchart showing a method (400) for delivery of the services of an automatic service level agreement. The method (400) may begin by receiving (block 402) selections, through a service manager portal, of a number of services from a number of third-party service providers. The selection of the service and third-party service provider is dictated by the specific needs of the customer. For example, a customer may want a tradeoff between cost and level of service and can select the service and third-party service provider that they are willing to pay for. According to one example, the services and third-party service providers may be selected by the customer. In another example, the service may be selected by the customer and the third-party service provider may be selected by the service manager portal.

With the service and third-party service providers selected, the method (400) continues by invoking (block 404) underlying contracts with the third-party service providers that correspond to the selected services to regulate service delivery. In this step, the service manager portal may modify the underlying contracts based on a number of evaluation criteria for each of the third-party service providers, In some examples, the service provided to the customer remains as specified in the SLA, but the performance standards in the underlying contract differ from those of the corresponding SLA items.

For example, a service manager portal may include additional performance standards into an underlying contract for a third-party service provider that has historically underperformed on delivering a particular service. According to another example, the service manager portal may remove performance standards from an underlying contract for a third-party service provider that has a history of service delivery above the level selected by the customer. A service manager portal may also maintain the same performance standards in the underlying contract, but modify the values of the standards. In yet another example, the service manager portal may maintain the performance standards as selected by the customer without any modification for a third-party service provider that consistently delivers the service at the level selected by the customer.

In this method (400) the service manager portal acts as a general contractor to the customer SLA to ensure that the services are provided at the specified level. In certain examples, the method (400) is performed automatically to reduce the cost of SLA management.

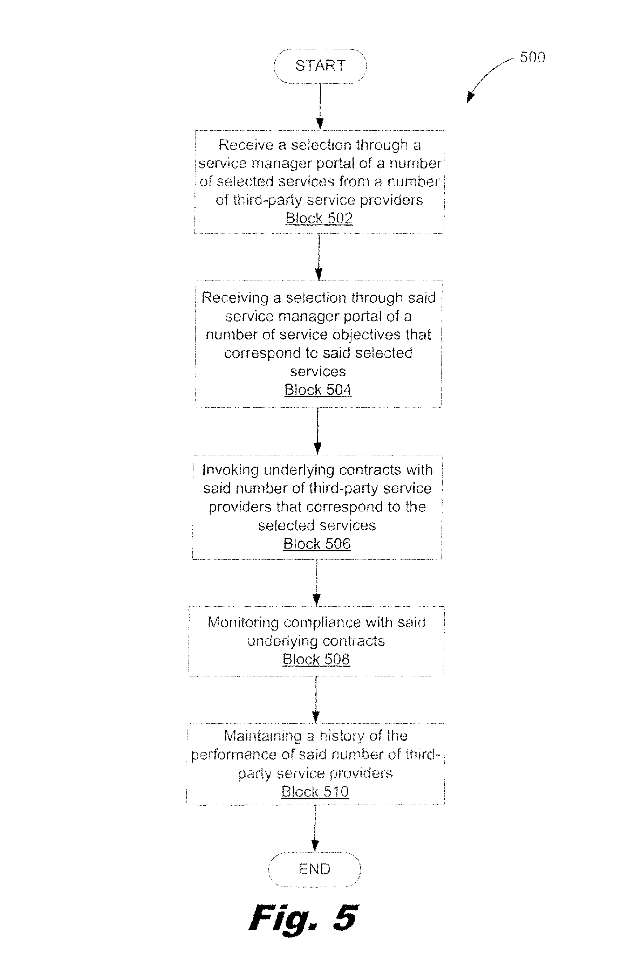

Fig. 5 is a flowchart showing a method (500) for delivering the services of an automatic SLA. The method (500) may begin by receiving (block 502) selection through a service manager portal a number of selected services from a number of third-party service providers.

The method (500) may also include receiving (block 504) a selection, through said service manager portal, of a number of performance standards that correspond to said selected services. These performance standards define the level of service that a customer expects from a third-party service provider. For example, a customer that selects an internet connectivity service may also select a performance standard that the service be provided at greater than 1.8 Mbps.

With the service and third-party service providers selected, the method (500) continues by invoking (block 506) underlying contracts with said number of third-party service providers that correspond to the selected services. These underlying contracts may include the performance standards selected by the customer. However, similar to the method (400) in Fig. 4, the service manager portal may modify the underlying agreement such that the service remains the same, but the performance standards differ from those of the SLA items.

The method (500) may also include monitoring (block 508) the third-party service provider's compliance with the underlying contracts. In this step the service provider may ensure that the third-party service provider is complying with the underlying contract. The method (500) may also include maintaining (block 510) a history of the performance of the third-party service providers, Doing so allows the service manager portal to modify future underlying contracts based on the performance under this current underlying contract. According to this example, the history of the performance may be stored in a memory cache communicatively coupled to the service manager portal.

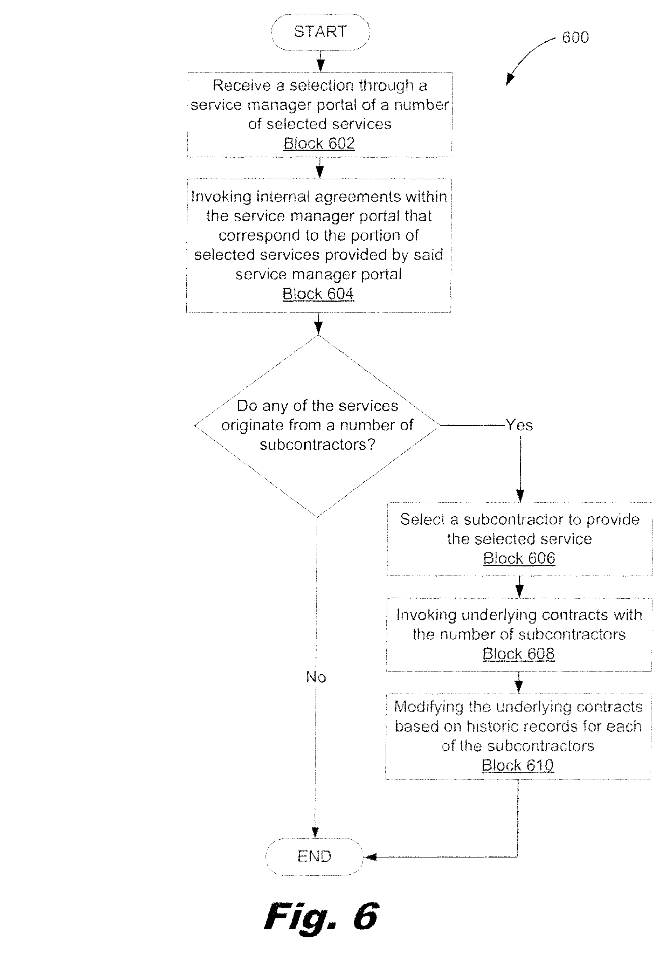

Fig. 6 is a flowchart showing a method (600) for delivering the services of an automatic service level agreement. The method (600) begins by receiving (block 602) a selection through a service manager portal of a number of selected services. According to this example, at least a portion of the number of services selected by a customer may be provided by the entity that operates the service manager portal.

The method (600) may invoke (block 604) internal agreements within the service manager portal that correspond to the selected services. These internal agreements are agreements between units of the service manager portal that coordinate the service provision to the customer and ensure that the agreed level of service can be provided.

It is determined whether any of the services originate from a number of subcontractors. According to an example, the service manager portal may contract with a subcontractor to provide the service. In the event there are multiple subcontractors that may be available to deliver the service, the service manager portal may select (block 606) a subcontractor from this number to provide the selected service. The service manager portal may use a number of evaluation criteria to make this selection. In this example, the method (600) may then include invoking (block 608) an underlying contract with the selected subcontractor to ensure that the subcontractor delivers the service as stated in the underlying contract. Similar to the above described methods, the service manager portal may then modify (block 610) the underlying contracts with the subcontractors based on their historic performance. Where the services do not originate from the subcontractors, a subcontractor may not be selected to provide the service.

The preceding description has presented a method and system for delivering the services presented in an automatic service level agreement. The method may include receiving selection through a service manager portal of a number of selected services from a number of third-party service providers and invoking underlying contracts with said number of third-party service providers that correspond to the selected services. In this method, the underlying contract may be modified to reflect the past performance of the third-party service providers. Allowing modification in this fashion shifts the risk of nonperformance from the customer to the service provider. A system for implementing this method was also disclosed. This system and method enables automated compilation, activation and calculation of a number of SLAs with minimal manual involvement.

The preceding description has been presented only to illustrate and describe examples of the principles described. This description is not intended to be exhaustive or to limit these principles to any precise form disclosed. Many modifications and variations are possible in light of the above teaching.

## Claims

1. A method (400) for delivering the services of automatic service level agreements comprising:
receiving (402) a selection through a service manager portal of a number of services offered by a number of third-party service providers; and
invoking (404) underlying contracts with said number of third-party service providers that correspond to the selected services,
wherein said underlying contracts are modified when created based on an evaluation of each of said third-party service providers.

2. The method of claim 1, further comprising receiving (504) selection through said service manager portal of a number of service objectives that correspond to said selected services.

3. The method of claim 1, further comprising maintaining (510) a history of a performance of each of said number of third-party service providers.

4. The method of claim 1, further comprising monitoring (508) compliance with said underlying contracts.

5. The method of claim 1, in which said service manager portal provides at least a portion of the selected services.

6. The method of claim 5, further comprising invoking (604) internal agreements within said service manager portal that correspond to the portion of selected services provided by said service manager portal.

7. The method of claim 5, in which the portion of selected services provided by said service manager portal are provided by a number of subcontractors, further comprising:
selecting (606) a subcontractor to provide the selected service;
invoking (608) underlying contracts with said number of subcontractors;
and
modifying (610) said underlying contracts based on historic records for each of said subcontractors.

8. A system (100) for compilation of automatic service level agreements (102) comprising:
a service manager portal (104) that:
receives a selection of a number of services offered by a number of third-party service providers;
modifies an underlying contract for each third-party service provider selected to provide a service to the customer, said modifying being based on evaluation criteria for each such third-party service provider; and
activates a resulting underlying contract with each third-party service provider selected to provide a service to the customer.

9. The system of claim 8, in which the service manager portal maintains a history of a performance of each of said number of third-party service providers.

10. The system of claim 8, in which the service manager portal monitors compliance with said underlying contract.

11. The system of claim 8, in which the service manager portal receives selection of a number of service objectives that correspond to the selected services.

12. The system of claim 8, in which the service manager portal:
provides at least a portion of the selected services; and
invokes internal agreements within said service manager portal that correspond to the portion of the selected services provided by the service manager portal.

13. The system of claim 12, further comprising a number of subcontractors (308) that provide the portion of selected services to the service manager portal.

14. The system of claim 8, further comprising a memory cache (110) that stores data pertaining to historic performance of each of said number of third-party service providers.

15. A computer program product for compilation of automatic service level agreements, the computer program product comprising:
a computer readable storage medium comprising computer usable program code embodied therewith, the computer usable program code comprising:
computer usable program code that, when executed by a processor, receives selection through a service manager portal of a number of selected services from a number of third-party service providers; and
computer usable program code that, when executed by a processor, activates underlying contracts with said number of third-party service providers that correspond to the selected services,
wherein said underlying contracts are modified when created based on historic performance records for each of said service providers.
